# EUROPEAN PATENT SPECIFICATION

(11) **EP 2 108 433 B1**
(45) Date of publication and mention of the grant of the patent: **08.06.2011**
(21) Application number: 09250811.8
(22) Date of filing: 23.03.2009
(51) Int. Cl.: B01D 46/24, B01D 46/00

(54) **Manufacturing method of plugged honeycomb structure**
Herstellungsverfahren für eine abgedichtete Wabenstruktur
Procédé de fabrication de structure en nid d'abeille obstruée

(30) Priority: 26.03.2008 JP 2008080730
(43) Date of publication of application: 14.10.2009
(73) Proprietor: NGK Insulators, Ltd., Aichi Pref. 467-8530 (JP)
(72) Inventor: Koketsu, Naoto, Nagoya City, Aichi-ken 467-8530 (JP)
(74) Representative: Paget, Hugh Charles Edward

(56) References cited:
- EP-A- 1 495 791
- EP-A- 1 516 658
- EP-A- 1 837 063
- EP-A- 1 997 599
- WO-A-2006/068767

## Description

### BACKGROUND OF THE INVENTION

### 1. Field of the Invention

The present invention relates to a manufacturing method of a plugged honeycomb structure. More particularly, it relates to a manufacturing method of a plugged honeycomb structure which can preferably be used in a filter such as a diesel particulate filter and in which predetermined cells (through holes) are plugged in the end face of the structure.

### 2. Description of the Related Art

As a dust collecting filter typified by a diesel particulate filter (DPF), a ceramic filter having a honeycomb structure has been used. Such a filter has a constitution in which one end of each of adjacent cells is plugged on opposite sides so that each end face of the honeycomb structure has a checkered pattern, the honeycomb structure having a large number of cells separated from one another by porous partition walls and constituting fluid flow paths.

In a case where an exhaust gas including fine particles such as particulates is allowed to pass through this filter (a plugged honeycomb structure) from one end face thereof, this exhaust gas flows into the structure from one cell whose end on the side of the one end face is not plugged. Then, the exhaust gas passes through the porous partition wall to enter another cell whose end on the side of the other end face of the structure is not plugged. Moreover, when the exhaust gas passes through this partition wall, the fine particles in the exhaust gas are collected by the partition wall. The purified gas from which the fine particles have been removed is discharged from the other end face of the honeycomb structure.

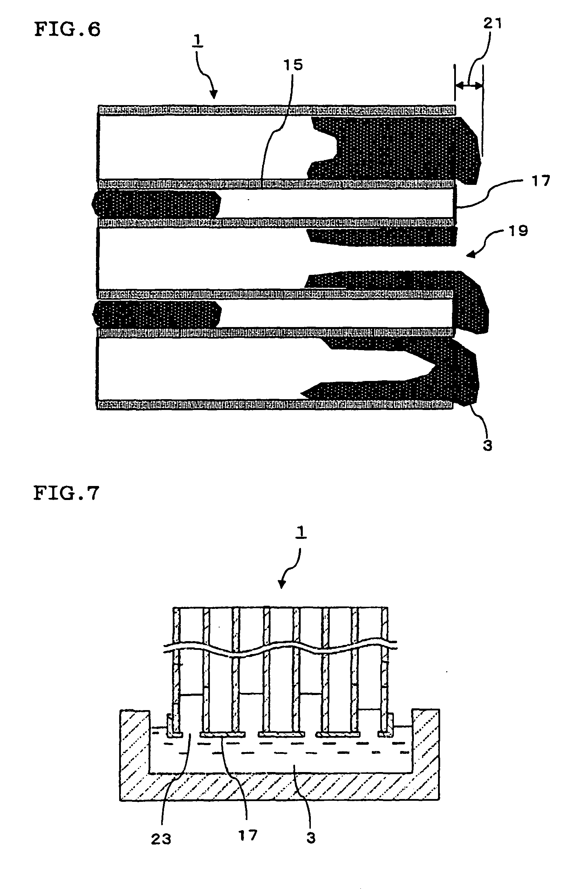

To manufacture the plugged honeycomb structure having such a constitution, as shown in Fig. 7, there is usually adopted a method of attaching, to the end face of a honeycomb structure 1, a mask film constituting a mask 17 and including slurry entrance holes 23 provided in positions of this mask film corresponding to the opening ends of predetermined cells; and immersing the end of the honeycomb structure 1 into a container where a plugging slurry 3 is received, to allow the plugging slurry 3 to enter the opening ends of the predetermined cells through the slurry entrance holes 23 of the film for the mask (e.g., see JP-A-2001-300922).

On the other hand, in International Publication WO2004/02429 is disclosed a columner filter having a honeycomb structure constituted of two types of cells including large-capacity cells (through holes) each having a relatively large area of a section thereof vertical to a longitudinal direction and small-capacity cells each having a relatively small area of the section, the number of the large-capacity cells being equal to that of the small-capacity cells, so that a pressure loss during the collection of the particulates is low and so that a large amount of particulates can be collected.

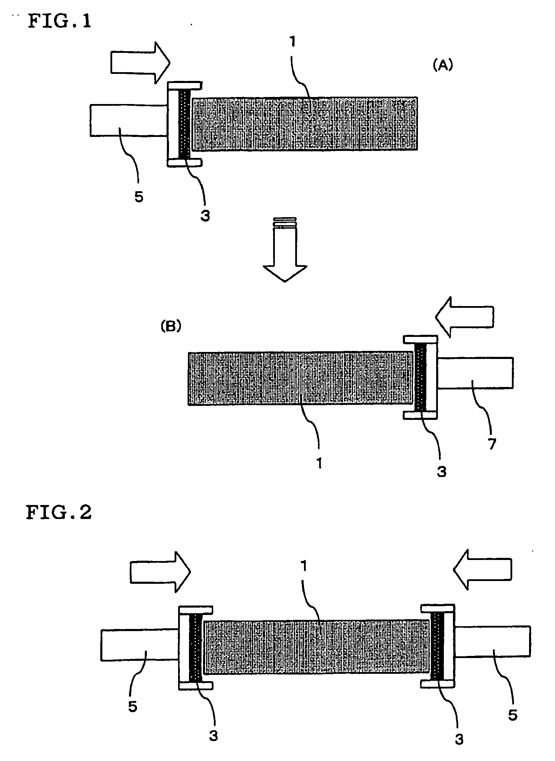

During plugging of the honeycomb structure, as shown in Fig. 2, when the structure is horizontally held along the longitudinal direction of the cells and both end faces of the structure are simultaneously subjected to the plugging, a time required for the manufacturing of the plugged honeycomb structure can advantageously be shortened. However, as to the honeycomb structure disclosed in International Publication WO2004/024294 as shown in Fig. 2, when the structure is horizontally held along the cell longitudinal direction and the slurry 3 is simultaneously pressed onto both the end faces of the honeycomb structure 1 by pressing means 5 to perform the plugging, the plugging slurry flows backwards from the cells having relatively large sectional areas. In the worst case, a problem occurs that through holes are formed in portions to be plugged.

### SUMMARY OF THE INVENTION

The present invention has been developed in view of such a problem, and an objective is to provide a method for manufacturing a honeycomb structure comprising a large number of cells arranged via partition walls, the cells being constituted of two types of cells including large cells each having a relatively large area of a section thereof vertical to a longitudinal direction and small cells each having a relatively small area of the section, the large cells being plugged in one end face of the honeycomb structure and the small cells being plugged in the other end face of the honeycomb structure. In the method, while suppressing the counterflow of a plugging slurry, the structure is horizontally held along the longitudinal direction of the cells.

As a result of intensive investigation for achieving the above objective, the present inventors have found that the above objective can be achieved by the following method, and has completed the present invention. That is, according to the present invention, a manufacturing method of a honeycomb structure is provided as follows.

[1] A manufacturing method of a honeycomb structure comprising a large number of cells arranged via partition walls, the cells being constituted of two types of cells including large cells each having a relatively large area of a section thereof vertical to a longitudinal direction and small cells each having a relatively small area of the section, the large cells being plugged in one end face of the honeycomb structure and the small cells being plugged in the other end face of the honeycomb structure, the method comprising the steps of: horizontally holding the honeycomb structure before the plugging along the longitudinal direction of the cells; first plugging the large cells; and thereafter plugging the small cells.

[2] The manufacturing method according to [1], wherein 0.3 second or more elapses after the end of plugging of the large cells, to the start of plugging of the small cells.

[3] The manufacturing method according to [1] or [2], wherein the area of the section of each large cell vertical to the longitudinal direction is 1.21 mm² or more.

[4] The manufacturing method according to any one of [1] to [3], wherein a sectional area ratio between the large cells and the small cells is 1.21 or more.

[5] The manufacturing method according to any one of [1] to [4], wherein a plugging slurry has a viscosity of 500 dPa•s or less.

According to the manufacturing method of the present invention, the counterflow of the plugging slurry can be suppressed during the manufacturing of the honeycomb structure comprising a large number of cells arranged via partition walls, the cells being constituted of two types of cells including the large cells each having a relatively large area of the section thereof vertical to the longitudinal direction and the small cells each having a relatively small area of the section, the large cells being plugged in the one end face of the honeycomb structure and the small cells being plugged in the other end face of the honeycomb structure, the honeycomb structure before the plugging is horizontally held along the longitudinal direction of the cells.

### BRIEF DESCRIPTION OF THE DRAWINGS

Fig. 1 is a schematic front view showing one embodiment of a method of the present invention;
Fig. 2 is a schematic front view showing a comparative example;
Fig. 3 is a perspective view of a honeycomb structure manufactured by the embodiment of the method of the present invention;
Fig. 4 is a schematic front view of a part of one end face of the honeycomb structure manufactured by the embodiment of the method of the present invention;
Fig. 5 is a schematic front view of a part of the one end face of the honeycomb structure manufactured by the embodiment of the method of the present invention;
Fig. 6 is a schematically vertically sectional view of the honeycomb structure showing a measurement method of a slurry counterflow height and through holes; and
Fig. 7 is a schematic sectional view showing a method of a conventional technology.

### [Description of Reference Numerals]

1: honeycomb structure, 3: slurry, 5, 7: pressing means, 9a, 9b: end face, 11a, 11b: large cell, 13a, 13b: small cell, 15: partition wall, 17: mask, 19: through hole, 21: slurry counterflow height, 23: slurry entrance hole

### DESCRIPTION OF THE PREFERRED EMBODIMENT

Hereinafter, the best mode for carrying out the present invention will be described, but it should be understood that the present invention is not limited to the following embodiment and that even the following embodiment appropriately modified or improved based on the knowledge of any person skilled in the art without departing from the gist of the present invention is included in the scope of the present invention.

A manufacturing method of a plugged honeycomb structure of the present embodiment is a manufacturing method of a honeycomb structure including a large number of cells (through holes) arranged via partition walls, the cells being constituted of two types of cells including large cells each having a relatively large area of a section thereof vertical to a longitudinal direction and small cells each having a relatively small area of the section, the large cells being plugged in one end face of the honeycomb structure and the small cells are plugged in the other end face of the honeycomb structure, the method including the steps of horizontally holding the honeycomb structure before the plugging along the longitudinal direction of the cells; first plugging the large cells; and continuously plugging the small cells.

### [1] Formation of Honeycomb Base Material

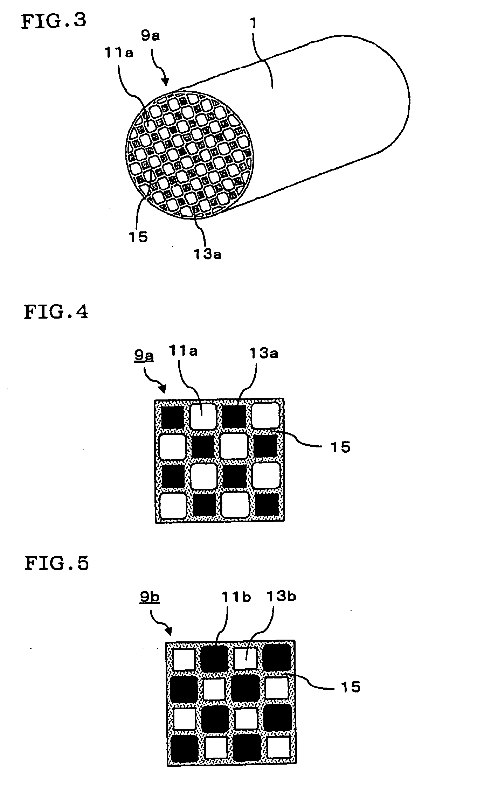

Figs. 3 to 5 are diagrams showing a honeycomb structure manufactured by one embodiment of a manufacturing method of the present invention. Fig. 3 is a perspective view of the honeycomb structure manufactured by the embodiment of the method of the present invention. In Fig. 3, one end face 9a of a honeycomb structure 1 is constituted of a large number of cells (11a and 13a) arranged via partition walls 15, and the cells include large cells 11a each having a relatively large area of a section thereof vertical to the longitudinal direction of the cells and small cells 13a each having a relatively small area of the section vertical to the longitudinal direction of the cells. The large cells 11a and the small cells 13a are alternately arranged to form a checkered pattern. In this one end face of the honeycomb structure 1, the small cells 13a are plugged. Fig. 4 is a schematic front view showing a part of this one end face.

On the other hand, Fig. 5 is a schematic front view of a part of the other end face 9b of the honeycomb structure 1 positioned on the side opposite to the one end face 9a. In the other end face 9b, a large number of cells (11b and 13b) are arranged via the partition walls 15, and the large cells 11b are plugged, whereas the small cells 13b are not plugged.

There is not any special restriction on a honeycomb base material for use in the manufacturing method of the plugged honeycomb structure of the present embodiment, as long as a large number of cells are arranged via the partition walls and the cells are constituted of two types of cells including large cells each having a relatively large area of a section thereof vertical to a longitudinal direction and small cells each having a relatively small area of the section, but, for example, a honeycomb base material manufactured by the following method may be used.

First, a kneaded clay for forming a honeycomb base material is formed. This clay is obtained by mixing and kneading at least one forming material selected from the group consisting of cordierite, silicon carbide, sialon, mullite, silicon nitride, zirconium phosphate, zirconia, titania, alumina and silica.

When, for example, a silicon carbide material is used as the forming material, silicon carbide powder is prepared as an aggregate, and metal silicon powder and an organic binder as binding materials are added to and mixed with the aggregate to obtain blended powder. Afterward, if necessary, auxiliary forming agents such as a surfactant and water can be added to and kneaded with the powder to obtain the desired kneaded clay.

There is not any special restriction on a pore former, as long as the pore former has properties that the pore former is flied and scattered to disappear by a firing step, and an inorganic substance such as cokes, a polymer compound such as a resin balloon and an organic substance such as starch may be used alone or as a combination of them.

As the organic binder, hydroxypropyl methyl cellulose, methyl cellulose, hydroxyethyl cellulose, carboxyl methyl cellulose, polyvinyl alcohol or the like may be used. They may be used alone or as a combination of two or more binders of them.

There is not any special restriction on a method of kneading the forming material to prepare the kneaded clay, and examples of the method include methods using a kneader, a vacuum clay kneader and the like.

Next, the resultant clay is formed into a honeycomb shape to prepare a formed honeycomb article. There is not any special restriction on the method of preparing the formed honeycomb article, and a heretofore known forming method such as extrusion forming, injection forming or press forming may be used. Above all, a preferable example is the method of the extrusion forming of the clay prepared as described above by use of a die having desired cell shape, partition wall thickness and cell density.

It is to be noted that there is not any special restriction on the whole shape of the formed honeycomb article, but examples of the shape include a cylindrical shape, a triangle-post-like shape, a quadrangular-post-like shape and another square-post-like shape. Moreover, there is not any special restriction on the cell shape of the formed honeycomb article (the cell shape in the section of the formed honeycomb article vertical to a direction (a cell extending direction, a longitudinal direction) in which the central axis of the article extends), and examples of the shape include a triangular shape, a quadrangular shape and a hexagonal shape or the like.

The formed honeycomb article prepared in this manner is dried to prepare the honeycomb base material. There is not any special restriction on this drying method, and a heretofore known drying method such as hot air drying, microwave drying, dielectric drying, reduced pressure drying, vacuum drying or freeze drying may be used. Above all, a drying method obtained by combining the hot air drying with the microwave drying or the dielectric drying is preferably used in that the whole formed article can quickly and uniformly be dried.

### [2] Masking Step:

The manufacturing method of the plugged honeycomb structure of the present embodiment preferably has, before a plugging step described later, a masking step of attaching mask films to both the end faces of the honeycomb base material, and making slurry entrance holes in portions of the mask film corresponding to one end of each of predetermined cells and the other end of each of the remaining cells. When the mask films are attached to both the end faces of the cylindrical honeycomb base material in advance in this manner, productivity and operability can be improved. The method has, for example, an advantage that both the end faces can simultaneously be subjected to a hole making operation by irradiation with laser light, so that the productivity can be improved owing to time shortening. Hereinafter, the masking step will specifically be described.

There is not any special restriction on the material of the mask, but the material is preferably polypropylene (PP), polyethylene terephthalate (PET), polyimide, or a fluorine resin, because thermal processing for forming the holes is easily performed. Moreover, the mask preferably includes an adhesive layer, and the material of the adhesive layer is preferably an acrylic resin, a rubber based material (e.g., a rubber including a natural rubber or a synthetic rubber as a main component) or a silicon based resin.

Next, the slurry entrance holes are made in the portions of the attached mask film corresponding to the opening ends of the small cells of the one end face, and the slurry entrance holes are also made in the portions of the other mask film corresponding to the opening ends of the large cells of the other end face. The slurry entrance holes function as inflow ports for allowing a plugging slurry to flow into the cells in the plugging step. It is to be noted that when the open area of each slurry entrance hole is set to 30 to 100% with respect to the open area of the opening of each cell, the plugging slurry can satisfactorily enter the cells. The above open area is set to further preferably 40 to 100%, especially preferably 50 to 100%.

There is not any special restriction on a method of making the slurry entrance holes in the films for the masks, but examples of the method include a method of making the holes by laser irradiation (laser marker), a method of making the holes individually by use of one needle, and a method of collectively making a large number of slurry entrance holes by use of pin-holder-like needles having a predetermined shape corresponding to a cell pitch. It is to be noted that from a viewpoint that the method can flexibly cope with even the honeycomb base material having the cell pitch and opening shape which are not fixed, a method is preferable which image-processes the end faces of the honeycomb base material, and extracting cell positions where the slurry entrance holes should be made, to make the slurry entrance holes in portions corresponding to the extracted positions by the laser marker.

It is to be noted that when the mask films are attached to both the end faces of the honeycomb base material, the slurry entrance holes are preferably formed in the portions of the films corresponding to the one end of each of the predetermined cells and the other end of each of the remaining cells, and the slurry entrance holes formed in the portions of the films corresponding to the one end of each of the predetermined cells and the other end of each of the remaining cells are especially preferably formed to provide complementary checkered patterns.

The example in which the masking step is performed by use of the mask films has been described above in detail. However, any known method such as a configuration in which a fixed mask of a metal or the like is used may be adopted.

### [3] Plugging Step (Formation of Plugging Portion)

In the manufacturing method of the plugged honeycomb structure of the present embodiment, the plugging slurry is allowed to enter both the ends of the honeycomb base material prepared as described above to perform the plugging.

Fig. 1 is a schematic front view showing the manufacturing method of the plugged honeycomb structure of the present embodiment. As shown in Fig. 1(A), first the honeycomb structure 1 is horizontally held along the longitudinal direction of the cells, and the slurry 3 is pressed to the one end face of the honeycomb structure in an arrow direction by the pressing means 5 to form plugs on the side of the one end face and plug the large cells. Afterward, as shown in Fig. 1(B), the slurry 3 is continuously pressed to the other end face of the honeycomb structure in an arrow direction by pressing means 7 to form plugs on the side of the other end face and plug the small cells.

Here, the term "continuously" indicates that the small cells are plugged in several seconds after plugging the large cells. Specifically, it is indicated that the small cells are plugged, when 0.1 second or more elapses after the large cells are plugged. More specifically, it is preferable to plug the small cells, when about 0.3 second or more elapses after the large cells are plugged. Here, a time from a time immediately after the end of the plugging of the large cells to a time immediately before the start of the plugging of the small cells is a plugging time difference. When the plugging time difference is less than 0.1 second, there is a tendency that the counterflow of the slurry for plugging the large cells cannot be suppressed. When the difference exceeds 4 seconds, the solution of the problem of the slurry counterflow is not especially adversely affected. Therefore, the plugging time difference does not have to be especially restricted, but a slurry counterflow suppressing effect gradually decreases with respect to the plugging time difference. Therefore, the plugging time difference is preferably set to a range in which a predetermined lead time of the plugging step is satisfied.

Examples of the pressing means include cylinders such as an air cylinder, a hydraulic cylinder and an electromotive cylinder. When a position control function is imparted, the pressing means by air, hydraulic pressure or an electromotive servo mechanism may be used.

The manufacturing method of the present invention is advantageous in a case where the area of the section of each large cell vertical to the longitudinal direction thereof is 1.21 mm² or more, more specifically 1.69 mm² or more.

In a case where the large cells and the small cells are simultaneously plugged or the small cells are plugged in advance, when the area of the section of each large cell vertical to the longitudinal direction thereof increases, an internal pressure in the large cells rises during the pressing for the plugging of the large cells. After the releasing of the pressing means, the slurry cannot bear the internal pressure in the large cells, and flows backwards. On the other hand, when the large cells are plugged in advance, the end face on the opposite side is opened, and in this opposite end face, the large cells are completely masked, and the small cells are provided with the mask in which the holes are made. Air comes out of the holes of the small cells in the opposite end face of the structure through the partition walls, and the rise of the internal pressure in the large cells is suppressed.

On the other hand, the small cells have a slurry flow resistance larger than that of the large cells owing to the difference in the sectional area between the large cells and the small cells. Therefore, the slurry does not easily flow through the small cells as compared with the large cells, and the counterflow of the slurry does not easily occur irrespective of the rise of the internal pressures in the cells.

Therefore, when the area of the section of each large cell vertical to the longitudinal direction thereof is less than 1.21 mm², there is a tendency that the counterflow of the plugging slurry through the large cells is not generated irrespective of the order of the plugging.

The manufacturing method of the present invention is also advantageous for manufacturing the honeycomb structure having a sectional area ratio of 1.21 or more, more specifically 1.69 or more between the large cells and the small cells.

This is because in a case where the large cells and the small cells are simultaneously plugged or the small cells are plugged in advance, when the sectional area ratio between the large cells and the small cells increases, the internal pressure in the large cells rises during the pressing for the plugging of the large cells. After the releasing of the pressing means, the slurry cannot bear the internal pressure in the large cells, and flows backwards. On the other hand, when the large cells are plugged in advance, the opposite end face of the structure is opened, and in this opposite end face, the large cells are completely masked, and the small cells are provided with the mask in which the holes are made. The air comes out of the holes of the small cells in the opposite end face of the structure through the partition walls, and the rise of the internal pressure in the large cells is suppressed.

On the other hand, since the small cells have the slurry flow resistance larger than that of the large cells owing to the difference in the sectional area between the large cells and the small cells, the slurry does not easily flow through the small cells as compared with the large cells, and the counterflow of the slurry does not easily occur irrespective of the rise of the internal pressures in the cells.

Therefore, when the sectional area ratio between the large cells and the small cells is less than 1.21, there is a tendency that an only little difference in the generation of the slurry counterflow is made between the large cells and the small cells, irrespective of the order of the plugging.

There is not any special restriction on the type of the plugging slurry for use in the manufacturing method of the plugged honeycomb structure of the present embodiment, but, for example, a slurry prepared by mixing ceramic powder and a dispersion medium for the slurry may be used.

Examples of the ceramic powder include powder containing ceramic powder such as silicon carbide powder or cordierite powder, and there is not any special restriction on the type of the powder. The same material as that of the honeycomb structure is preferably selected. Examples of the dispersion medium for the slurry include organic solvents such as acetone, methanol and ethanol, and water. Furthermore, an additive such as a binding agent or a deflocculation agent may be added to the plugging slurry, if necessary. As the binding agent, for example, a resin such as polyvinyl alcohol (PVA) may be used, and a thermally gel hardening binding agent having characteristics that the agent is gelled when heated is preferably used. As this thermally gel hardening binding agent, for example, methyl cellulose may preferably be used.

The plugging slurry has a viscosity of preferably 50 to 900 dPa•s, especially preferably 50 to 500 dPa•s. In a case where the viscosity of the plugging slurry is less than 50 dPa•s, even when the slurry can be supplied to the slurry entrance holes, the slurry might not be held in the vicinity of the ends of the cells owing to excessively high fluidity. On the other hand, in a case where the viscosity exceeds 900 dPa•s, the fluidity is poor, and hence the slurry might not sufficiently be supplied to the predetermined depths of the slurry entrance holes. Here, "the viscosity of the plugging slurry" mentioned in the present specification is a value measured by a rotary viscosity meter. As the viscosity meter, TVB-10H manufactured by TOKI SANGYO CO., LTD, and a rotor H7 is used on measurement conditions that a rotation speed is 30 rpm, and a numeric value obtained in five minutes after the start of the rotation of the rotor is a measured value.

The plugging portions have depths which vary depending on the plugged honeycomb structure to be manufactured, but the depths are in a range of usually 1 to 50 mm, preferably 2 to 10 mm, when the plugged honeycomb structure having a diameter of 100 to 500 mm and a length of 100 to 500 mm is manufactured.

It is to be noted that after allowing the plugging slurry to uniformly enter the cells, the plugging slurry which has entered the cells is dried, to form the plugging portions in the ends of the cells. As a method of drying this plugging slurry, a method similar to the above drying method of the formed honeycomb article may preferably be used. There is not any special restriction on a drying time of the plugging slurry, but in the case of, for example, the hot air drying, the drying time is in a range of preferably 5 to 60 minutes, further preferably 10 to 45 minutes, especially preferably 15 to 35 minutes. In a case where the drying time is less than 5 minutes, the slurry is insufficiently dried, and hence when the mask films are peeled, a part of the plugging portions peels together with the films, and concave portions might be formed. On the other hand, when the drying time exceeds 60 minutes, productivity might remarkably lower.

Moreover, there is not any special restriction on a drying temperature of the above plugging slurry, but the temperature is in a range of preferably 10 to 300°C, further preferably 20 to 200°C, especially preferably 50 to 150°C. When the drying temperature is less than 10°C, excessively long time might be required for sufficiently drying the slurry. On the other hand, when the temperature exceeds 300°C, the honeycomb base material or the plugging slurry might thermally deteriorate.

It is to be noted that in the plugged honeycomb structure manufactured by the manufacturing method of the plugged honeycomb structure of the present embodiment, the plugging portions are preferably formed in one opening end of each of the predetermined cells and the other opening end of each of the remaining cells. The plugging portions formed in the one opening end of the predetermined cell and the other opening end of the remaining cell are especially preferably arranged to form complementary checkered patterns.

### [4] Firing:

Next, the dried honeycomb base material provided with the plugs can be fired (finally fired) to obtain the plugged honeycomb structure. It is to be noted that the material is preferably calcined before the final firing, to prepare a calcined article. The "calcining" is an operation of burning organic substances (the organic binder, dispersant, pore former, etc.) in the honeycomb base material to remove the substances.

The firing conditions (temperature and time) of the final firing vary in accordance with the type of the forming material, and hence appropriate conditions may be selected in accordance with the type.

### [Examples]

Hereinafter, the present invention will specifically be described in accordance with examples, but the present invention is not limited to these examples.

### (Example 1-1)

Material powder containing silicon carbide powder as a main component was kneaded to obtain a kneaded clay, and a quadrangular-post-like silicon carbide formed honeycomb article was prepared from this clay by extrusion forming. The article had a square cell sectional shape (one side of each large cell had a length of 1.99 mm, one side of each small cell had a length of 1.27 mm), partition wall thicknesses of about 0.38 mm, an outer diameter of 37.5 mm x 37.5 mm and a length of 8 inches. Here, each cell diameter is the length of one side of each square cell. Afterward, this formed honeycomb article was dried by a microwave drying machine, and completely dried by a hot air drying machine to obtain a honeycomb base material. Both end faces of the resultant honeycomb base material were cut into predetermined dimensions.

Next, the resultant honeycomb base material was subjected to plugging. Before the plugging of the honeycomb base material, a plugging slurry was prepared.
As the plugging slurry, a slurry prepared by mixing 80 parts by mass of silicon carbide powder, 20 parts by mass of metalic silicon powder, 30 parts by mass of water as a dispersion medium and 15 parts by mass of an additive such as a binding agent or a deflocculation agent was used. The resultant plugging slurry had a viscosity of 216.5 dPa•s.

Mask films were attached to both the end faces of the above honeycomb base material, and holes were made in the mask films in a checkered pattern manner, so that plugs of the resultant plugged honeycomb structure formed complementary checkered patterns in one end face of the honeycomb base material and the other end face thereof. It is to be noted that as the films, tapes were used, each tape including, on a polyethylene terephthalate (PET) base material, an adhesive layer (a bonding force of 1.9 N/cm) made of an acrylic adhesive.

A container in which the slurry was received was attached to the tip of an air cylinder, and this container was pressed onto each end face of the honeycomb structure by the air cylinder, thereby allowing the slurry to enter the predetermined cells.

A drying treatment was performed by using the hot air drying machine on conditions at a temperature of 120°C for a time of 30 minutes.

The resultant honeycomb structure was used to observe the presence of a slurry counterflow height 21 or a through hole 19 shown in Fig. 6, thereby performing general evaluation. Here, when the slurry counterflow height is less than 1.0 mm and any through hole is not generated, the evaluation is represented by a double circle. When the slurry counterflow height is in a range of 1.0 to 1.3 mm and any through hole is not generated, the evaluation is represented by a circle. When the slurry counterflow height is in a range of 1.3 to 3.0 and any through hole is not generated, the evaluation is represented by a triangle. When the slurry counterflow height is 3.0 or more or the through hole is generated, the evaluation is represented by a cross. The results are shown in Table 1.

**[Table 1]**

| | Plugging time difference [sec] | Large cell diameter [mm] | Small cell diameter [mm] | Cell diameter ratio | plugging slurry viscosity [dPa•s] | Slurry counterflow height [mm] | Generation of through hole | Evaluation |
|---|---|---|---|---|---|---|---|---|
| Example 1-1 | 0.3 | 1.99 | 1.27 | 1.57 | 216.5 | 1.6 | None | Δ |
| Example 1-2 | 2.0 | 1.99 | 1.27 | 1.57 | 216.5 | 1.3 | None | ○ |
| Example 1-3 | 4.0 | 1.99 | 1.27 | 1.57 | 216.5 | Less than 1.0 | None | ⊚ |
| Example | 0.0 | 1.99 | 1.27 | 1.57 | 216.5 | 3.0 or more | Present | x |
| Reference Example 1-1 | 0.0 | 1.99 | 1.27 | 1.57 | 494.3 | 1.2 | None | ○ |
| Reference Example 1-2 | 0.0 | 1.99 | 1.99 | 1.00 | 216.5 | 1.6 | None | Δ |
| Example 2 | 0.3 | 1.34 | 1.02 | 1.31 | 216.5 | Less than 1.0 | None | ⊚ |
| Comparative Example 2 | 0.0 | 1.34 | 1.02 | 1.31 | 216.5 | 1.1 | None | ○ |
| Reference Example 2 | 0.0 | 1.34 | 1.34 | 1.00 | 216.5 | Less than 1.0 | None | ⊚ |
| Reference Example 3-1 | 0.0 | 1.15 | 0.99 | 1.16 | 216.5 | Less than 1.0 | None | ⊚ |
| Reference Example 3-2 | 0.0 | 1.15 | 0.99 | 1.16 | 81.1 | 1.0 | None | ○ |
| Reference Example 3-3 | 0.0 | 1.15 | 1.15 | 1.00 | 81.1 | Less than 1.0 | None | ⊚ |

Examples 1-2, 1-3, Comparative Example 1, Reference Examples 1-1, 1-2, Example 2, Comparative Example 2, Reference Example 2 and Reference Examples 3-1 to 3-3 were similar to Example 1-1 except that plugging time differences, cell diameters (a length of one side) and plugging slurry viscosities were set as shown in Table 1. Results are shown in Table 1.

As apparent from comparison between Examples 1-1 to 1-3 and Comparative Example 1 or comparison between Example 2 and Comparative Example 2, it is seen that as the plugging time difference is large, the slurry counterflow height decreases, and a satisfactory evaluation result is obtained.

It is seen from comparison between Comparative Example 1 and Reference Example 1-1 or comparison between Reference Example 3-1 and Reference Example 3-2 that as the plugging slurry viscosity is large, the slurry counterflow height decreases.

Next, it is seen from comparison between Reference Example 1-2 and Reference Example 2 that in the honeycomb structure having a uniform cell size, as the cell sizes are small (cell areas are small), the slurry counterflow height decreases.

Next, it is seen from comparison between Comparative Example 1 and Reference Example 1-2, comparison between Comparative Example 2 and Reference Example 2 or comparison between Reference Example 3-2 and Reference Example 3-3 that as the cell diameter ratio (the cell area ratio) is small, the slurry counterflow height decreases.

As described above, it is seen that conditions by the slurry viscosity, the cell sizes and the cell diameter ratio influence the degree of the slurry counterflow. It is also seen that even when the slurry viscosity, the cell sizes and the cell diameter ratio constitute conditions for easily generating the slurry counterflow, the slurry counterflow height can effectively noticeably be suppressed by use of a new manufacturing method of first plugging the large cells and then plugging the small cells.

Afterward, the article was fired to obtain the fired article of the plugged honeycomb structure having a desired quality. Firing conditions were set to 1350 to 1460°C and 5 hours.

A manufacturing method of the present invention can preferably be used in manufacturing a filter such as a diesel particulate filter.

## Claims

1. A manufacturing method of a honeycomb structure comprising a large number of cells arranged via partition walls,
the cells being constituted of two types of cells including large cells each having a relatively large area of a section thereof vertical to a longitudinal direction and small cells each having a relatively small area of the section,
the large cells being plugged in one end face of the honeycomb structure and the small cells being plugged in the other end face of the honeycomb structure,
the method comprising the steps of: horizontally holding the honeycomb structure before the plugging along the longitudinal direction of the cells; first plugging the large cells; and continuously plugging the small cells.

2. The manufacturing method according to claim 1, wherein when 0.3 second or more elapses after the large cells are plugged, the small cells are continuously plugged.

3. The manufacturing method according to claim 1 or 2, wherein the area of the section of each large cell vertical to the longitudinal direction is 1.21 mm² or more.

4. The manufacturing method according to any one of claims 1 to 3, wherein a sectional area ratio between the large cells and the small cells is 1.21 or more.

5. The manufacturing method according to any one of claims 1 to 4, wherein a plugging slurry has a viscosity of 500 dPa•s or less.

## Patentansprüche

1. Herstellungsverfahren für eine Wabenstruktur, die eine große Anzahl an Zellen umfasst, die durch Trennwände angeordnet sind,
wobei die Zellen durch zwei Arten von Zellen gebildet sind, einschließlich großer Zellen, die vertikal zu einer Längsrichtung jeweils eine relativ große Querschnittsfläche aufweisen, und kleinere Zellen, die eine relativ kleine Querschnittsfläche aufweisen,
wobei die großen Zellen an einer Endfläche der Wabenstruktur verschlossen sind und die kleinen Zellen an der anderen Endfläche der Wabenstruktur verschlossen sind,
wobei das Verfahren folgende Schritte umfasst: das horizontale Halten der Wabenstruktur vor dem Verschließen entlang der Längsrichtung der Zellen; zunächst das Verschließen der großen Zellen und in der Folge das Verschließen der kleinen Zellen.

2. Herstellungsverfahren nach Anspruch 1, worin die kleinen Zellen kontinuierlich verschlossen werden, wenn nach dem Verschließen der großen Zellen 0,3 s oder mehr vergehen.

3. Herstellungsverfahren nach Anspruch 1 oder 2, worin die Querschnittsfläche jeder großen Zelle vertikal zu der Längsrichtung 1,21 mm² oder mehr beträgt.

4. Herstellungsverfahren nach einem der Ansprüche 1 bis 3, worin das Verhältnis zwischen den Querschnittsflächen der großen Zellen und jenen der kleinen Zellen 1,21 oder mehr beträgt.

5. Herstellungsverfahren nach einem der Ansprüche 1 bis 4, worin eine Aufschlämmung zum Verschließen eine Viskosität von 500 dPa·s oder weniger aufweist.

## Revendications

1. Procédé de fabrication d'une structure en nid d'abeilles comprenant un grand nombre d'alvéoles agencées par des parois de séparation,
les alvéoles étant constituées de deux types d'alvéoles incluant des grandes alvéoles ayant chacune une aire relativement grande d'une section de celle-ci, verticale à une direction longitudinale et des petites alvéoles ayant chacune une aire relativement petite de la section,
les grandes alvéoles étant bouchées dans une face d'extrémité de la structure en nid d'abeilles, et les petites alvéoles étant bouchées dans l'autre face d'extrémité de la structure en nid d'abeilles,
le procédé comprenant les étapes de: tenir horizontalement la structure en nid d'abeilles avant le bouchage le long de la direction longitudinale des alvéoles; boucher d'abord les grandes alvéoles; et boucher continuellement les petites alvéoles.

2. Procédé de fabrication selon la revendication 1, dans lequel lorsque 0,3 seconde ou plus s'écoule après que les grandes alvéoles ont été bouchées, les petites alvéoles sont bouchées continuellement.

3. Procédé de fabrication selon la revendication 1 ou 2, dans lequel l'aire de la section de chaque grande alvéole verticale à la direction longitudinale est de 1,21 mm² ou plus grande.

4. Procédé de fabrication selon l'une quelconque des revendications 1 à 3, dans lequel un rapport d'aire en section entre les grandes alvéoles et les petites alvéoles est de 1.21 ou plus grand.

5. Procédé de fabrication selon l'une quelconque des revendications 1 à 4, où une boue de bouchage a une viscosité de 500 dPa•s ou moins.
